# DEMANDE DE BREVET EUROPEEN

(11) **EP 0 560 686 A1**
(43) Date de publication de la demande: **15.09.1993**
(21) Numéro de dépôt: 93400630.5
(22) Date de dépôt: 11.03.1993
(51) Int. Cl.: B60K 25/06

(54) **Système d'accouplement d'entraînement en rotation de l'organe rotatif d'un dispositif de travail à un véhicule porteur**

(30) Priorité: 11.03.1992 FR 9202908
(71) Demandeur: SICO-METAL-JURA, F-39200 Saint-Claude (FR)
(72) Inventeur: Mercado, Henri, 01000 St Denis les Bourg (FR)
(74) Mandataire: Thinat, Michel

(57) **Abrégé**

L'invention concerne un système d'accouplement d'entraînement en rotation de l'organe rotatif d'un dispositif de travail telle qu'une turbo-fraise, à un véhicule porteur.

Ce véhicule (2) comprend une plaque de base (3) de support pour le montage du dispositif sur le véhicule porteur, qui est disposé à l'avant du véhicule, et des prises de force situées à l'arrière et à l'avant du véhicule, la prise de force avant (5) étant placée au-dessus du niveau (6) des longerons du châssis du véhicule et, le cas échéant, près dudit moyen de support. Le système est caractérisé en ce que l'organe de prise de force pour l'entraînement de l'organe rotatif du dispositif de travail (1) est la prise de force avant (5) et en ce qu'il comprend un agencement de déport (7) de la prise de force avant (5) à un emplacement (11) plus bas et, le cas échéant, reculé par rapport au moyen de support (3).

L'invention est utilisable pour l'accouplement d'entraînement d'une turbo-fraise à un camion.

## Description

L'invention concerne un système d'accouplement d'entraînement en rotation de l'organe rotatif d'un dispositif de travail tel qu'une turbo-fraise, à un véhicule porteur tel qu'un camion qui comprend une plaque de base de support du dispositif de travail s'étendant sensiblement verticalement à l'avant du véhicule, et des prises de force situées à l'avant et à l'arrière du véhicule, la prise de force avant étant placée au-dessus du niveau des longerons du châssis du véhicule et, le cas échéant, près de ladite plaque de support, l'une des prises de force servant pour l'entraînement en rotation dudit organe rotatif.

Jusqu'à présent, toutes les turbo-fraises accouplées à un véhicule porteur sont généralement entrai- nées à partir de la prise de force arrière du véhicule, ce qui nécessite de faire passer la transmission sous le véhicule pour la ramener vers l'avant de celui-ci.

Un tel entraînement de la turbo-fraise à partir de la prise de force arrière présente de nombreux inconvénients majeurs. En raison du dispositif de transmission sous le véhicule, la garde au sol s'en trouve considérablement réduite. Le montage et le démontage du système au début et à la fin de l'hiver est relativement compliqué car il faut monter ou enlever tout le dispositif de transmission sous le véhicule. De plus, la prise de force arrière étant ainsi occupée, elle ne peut pas servir d'entraînement par exemple d'une saleuse.

La présente invention a pour objectif de proposer un système d'accouplement qui ne présente pas les inconvénients de l'état de la technique.

Pour atteindre ce but, le système d'entraînement selon l'invention est caractérisé en ce que l'organe de prise de force est la prise de force avant et qu'il comprend un agencement de déport de la prise de force avant à un emplacement plus bas et reculé par rapport à la plaque de support.

Selon une caractéristique avantageuse de l'invention, l'agencement de déport comprend un dispositif de déport vertical vers le bas de ladite prise de force avant, un dispositif de déport transversal par rapport à la direction longitudinale du véhicule et un dispositif intermédiaire de déport parallèlement à la direction longitudinale du véhicule, vers le centre de celui-ci, qui est interposé entre les dispositifs de déport vertical et transversal.

Selon une caractéristique avantageuse de l'invention, le dispositif de déport intermédiaire comprend un axe qui s'étend parallèlement à la direction du véhicule et dont les extrémités sont solidaires en rotation des organes de sortie et d'entrée des dispositifs de déport vertical et transversal.

Selon une autre caractéristique avantageuse de l'invention, le dispositif de déport vertical comprend une cascade de plusieurs pignons de renvoi juxtaposés et s'engrènant successivement, les deux pignons extrêmes étant solidaires en rotation de l'organe de prise de force avant et de l'axe de déport intermédiaire, les pignons étant enfermés et logés dans un carter de forme oblongue.

Selon encore une autre caractéristique avantageuse de l'invention, le dispositif de déport transversal comprend une cascade de plusieurs pignons juxtaposé en une rangée de façon à s'engrèner successivement, les pignons extrêmes étantsolidaires en rotation de l'organe de déport intermédiaire et d'un embout d'axe formant prise de force déportée.

Selon une autre caractéristique avantageuse de l'invention, l'organe de prise de force avant déporté est accouplé à l'organe d'entrainement d'entrée du dispositif de travail par un arbre cardan.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
la figure 1 est une vue latérale schématique montrant un système d'accouplement d'entraînement selon l'invention d'une turbo-fraise à partir de la prise de force avant d'un véhicule porteur ;
la figure 2 est une vue de dessus de l'ensemble de la figure 1, la turbo-fraise ayant été supprimée ;
la figure 3 est une vue en coupe le long de la ligne III-III de la figure 2 ;
la figure 4 est une vue en coupe le long de la ligne IV-IV de la figure 1.

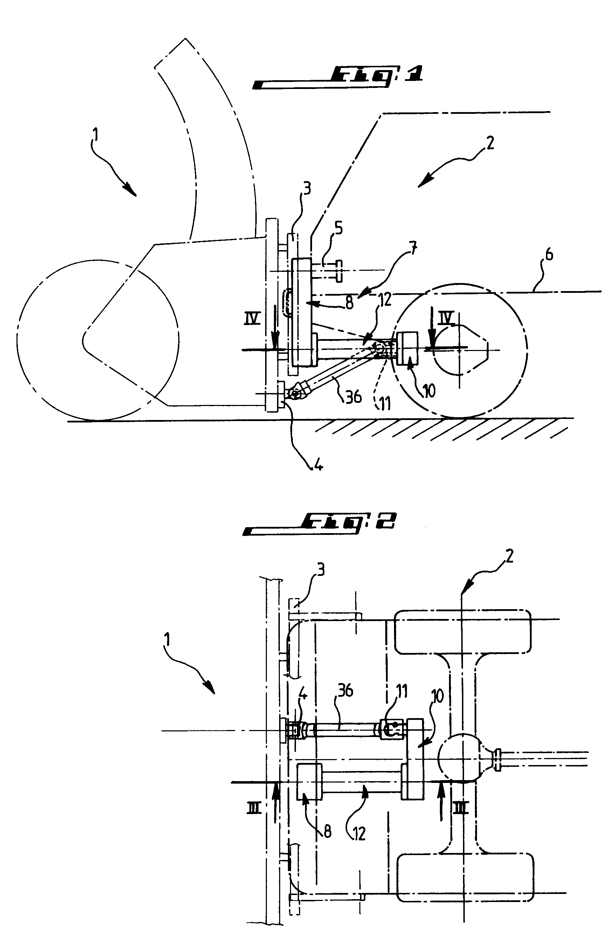

Sur la figure 1, les chiffres de référence 1 et 2 désignent de façon générale une turbo-fraise connue en soi et la partie avant d'un camion formant le véhicule porteur de la turbo-fraise. Cette dernière est montée sur une plaque de support 3 qui s'étend verticalement à l'avant du véhicule en étant fixée à celui-ci. Concernant la turbo-fraise 1, il suffit pour la compréhension de l'invention de retenir l'entrée d'entraînement qui porte le chiffre des références 4. Le véhicule est équipé d'une prise de force avant 5. Il ressort de la présentation schématique, que cette prise est placée à une hauteur relativement importante au-dessus du sol et au-dessus du niveau des longerons du châssis du véhicule, indiqué en 6, et relativement près de la plaque de support 3 du véhicule.

La particularité de l'invention réside dans le fait que les tambours qui portent les lames de fraisage de la turbo-fraise sont entraînés en rotation à partir de la prise de force avant 5. A cette fin le système d'accouplement rotatif selon l'invention comprend un agencement de déport 7 de la prise de force avant, qui comprend essentiellement un dispositif de déport vertical vers le bas 8, qui est accouplé à l'embout d'axe que constitue la prise de force 5, un dispositif 10 de déport transversal dont l'organe de sortie constitue l'embout d'axe déporté 11 et un dispositf intermédiaire de déport dans une direction parallèle à l'axe du véhicule vers le centre de celui-ci, qui est interposé entre les dispositifs de déport vertical 8 et transversal 10 et porte la référence 12.

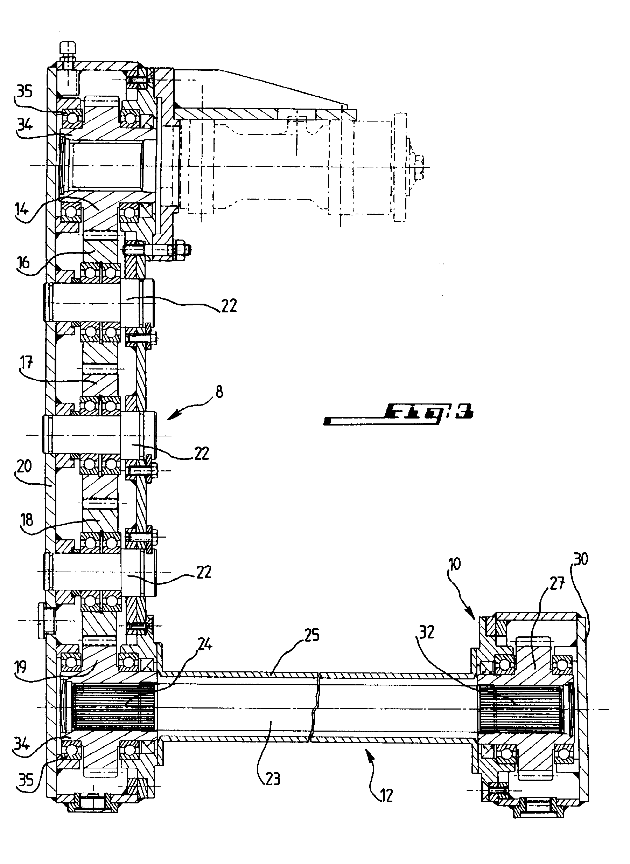

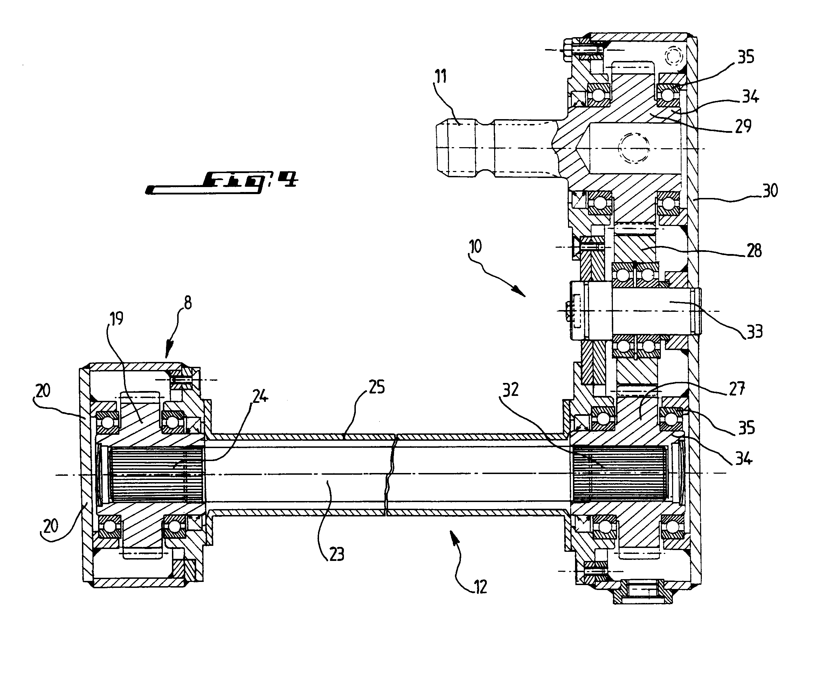

Comme le montre la figure 3, le dispositif de déport vertical 8 comporte essentiellement une cascade de cinq pignons 14 à 19 qui sont juxtaposés et disposés en une rangée rectiligne en s'engrènant successivement, c'est-à-dire chaque pignon engrènant le ou les deux pignons adjacents. Les cinq pignons sont enfermés dans un carter de forme oblongue appropriée 20 qui s'étend verticalement vers le bas à partir de l'embout de prise de force avant 5 du véhicule. Le pignon d'extrémité supérieur 14 est adapté pour être rendu solidaire en rotation de l'embout de prise de force avant 5 du véhicule. Les trois pignons intermédiaires 16, 17, 18 sont montés librement rotatifs sur des axes 22 qui sont montés fixe dans le boîtier. Le pignon d'extrémité inférieure 19 constitue la sortie du dispositif de déport vertical 8 et est adapté pour transmettre sa rotation au dispositif de déport intermédiaire 12. Ce dispositif comprend essentiellement un axe 23 canelé aux deux extrémités dont l'une portant la référence 24 est emmanchée dans le pignon 19 du dispositif de déport vertical 8 pour être solidaire en rotation de celui-ci. Cet axe 23 qui s'étend parallèlement à l'axe du véhicule sous l'avant de celui-ci est enfermé dans un manchon de boîtier 25. Ce boîtier est fixé à une extrémité sur le boîtier 20 du dispositif de déport vertical.

Le dispositif de déport transversal 10, dans le cas présent horizontal, comporte une cascade de trois pignons 27, 28 et 29 disposés en une rangée rectiligne, les uns engrènant les autres. Les trois pignons sont enfermés dans un boîtier 30 de forme oblongue qui s'étend horizontalement. Le pignon d'extrémité 27 constitue l'organe d'entrée du dispositif et reçoit à cette fin la deuxième extrémité canelée 32 de l'axe de déport intermédiaire 23 et est ainsi rendu solidaire en rotation de cet axe. Le pignon intermédiaire 28 est monté librement rotatif sur un axe 33 monté fixe dans le boîtier 30. L'autre pignon d'extrémité 29 est solidaire en rotation de l'embout d'axe 11 qui sort du boîtier 30 et constitue l'embout de prise de force déporté de l'agencement de déport qui vient d'être décrit. Ce pignon 29 comme le pignon 27 et d'ailleurs les pignons 14 et 19 du dispositif de déport vertical 8 comporte, de part et d'autre de sa partie centrale de pignon, des portions cylindriques coaxiales 34 par lesquelles le pignon est monté dans le boîtier à l'aide de roulements à billes 35. L'embout d'axe 11 vient de matière avec le pignon 29. C'est donc cet embout qui est relié par un arbre cardan de transmission 36 à l'entrée d'entraînement 4 de la turbo-fraise 1.

Il est à noter, que les dispositifs de déport vertical et transversal sont montés par leur carter ou boîtier sur la structure de l'avant de véhicule.

Il ressort de la description qui vient d'être faite, que l'invention permet un raccordement rotatif par des moyens facile à monter et à démonter d'une turbo-fraise 1 sur l'avant d'un véhicule porteur 2. Bien entendu de nombreuses modifications peuvent être apportées au système, notamment au dispositif de déport de la prise de force avant, sans sortir du cadre de la présente invention. Ainsi le nombre des pignons peut être différent en fonction des distances de déport vertical et transversal. On pourrait également choisir les pignons de façon que les dispositifs de déport accomplissent simultanément un effet réducteur du nombre de tour. Bien entendu un tel réducteur pourrait être prévu à l'entrée de la turbo-fraise.

## Revendications

1. Système d'accouplement d'entraînement en rotation de l'organe rotatif d'un dispositif de travail telle qu'une turbo-fraise, à un véhicule porteur tel qu'un camion qui comprend un moyen tel qu'une plaque de base de support pour le montage du dispositif sur le véhicule porteur, qui est disposé à l'avant du véhicule, et des prises de force situées à l'arrière et à l'avant du véhicule, et formée chacune par un embout d'axe rotatif moteur, la prise de force avant étant placée au-dessus du niveau des longerons du châssis du véhicule et, le cas échéant, près dudit moyen de support, l'une des prises de force servant pour l'entraînement en rotation dudit organe rotatif du dispositif de travail, l'organe de prise de force pour l'entraînement de l'organe rotatif du dispositif de travail étant la prise de force avant et les systèmes comprenant un agencement de déport de la prise de force avant à un emplacement plus bas et, le cas échéant, reculé par rapport au moyen de support (4), caractérisé en ce que l'agencement de déport (7) comprend un dispositif de déport vertical vers le bas (8) de ladite prise de force avant (5), un dispositif de déport transversal (10) par rapport à la direction longitudinale du véhicule (2) et un dispositif intermédiaire (12) de déport parallèlement à l'axe longitudinal du véhicule, vers le centre de celui-ci, qui est interposé entre les dispositifs de déport vertical (8) et transversal (10).

2. Système selon la revendication 1, caractérisé en ce que le dispositif de déport intermédiaire (12),comprend un axe (23) qui s'étend parallèlement à la direction longitudinale du véhicule et dont les extrémités (24, 32) sont solidaires en rotation des organes de sortie (19) et d'entrée (27) des dispositifs de déport vertical (8) et transversal (10).

3. Système selon l'une des revendications à 1 ou 2, caractérisé en ce que le dispositif de déport vertical (8) comprend une cascade de plusieurs pignons de renvoi (14 à 19) juxtaposés avantageusement en une rangée rectiligne et s'engrènant successivement, les deux pignons extrêmes (14, 19) étant solidaires en rotation de l'organe de prise de force avant (5) et de l'axe de déport intermédiaire (23), les pignons étant enfermés et logés dans un carter de forme oblongue (20).

4. Système selon l'une des revendications 1 à 3, caractérisé en ce que le dispositif de déport transversal (10) comprend une cascade de plusieurs pignons (27 à 29) juxtaposés en une rangée avantageusement rectiligne et s'engrènant successivement, les pignons extrêmes étant solidaires en rotations de l'organe de déport intermédiaire (23) et d'un embout d'axe (11) formant la prise de force déportée.

5. Système selon l'une des revendications précédentes, caractérisé en ce que l'organe de prise de force avant déporté (11) est accouplé à l'organe d'entraînement d'entrée (4) du dispositif de travail (1) par un arbre cardan (36).

6. Système selon l'une des revendications 3 à 5, caractérisé en ce que les pignons des dispositifs de déport peuvent être choisis pour produire un effet réducteur du nombre de tours entre l'organe de prise avant (5) du véhicule et l'organe de prise avant déporté (11).
